# EUROPÄISCHE PATENTSCHRIFT

(11) **EP 3 585 530 B1**
(45) Veröffentlichungstag und Bekanntmachung des Hinweises auf die Patenterteilung: **03.01.2024**
(21) Anmeldenummer: 18701469.1
(22) Anmeldetag: 24.01.2018
(51) Int. Cl.: B21D 19/08, B21D 22/02

(54) **VERFAHREN ZUR OPTIMIERTEN HERSTELLUNG EINES BAUTEILS MIT ZUMINDEST EINEM NEBENFORMELEMENT**
METHOD FOR THE OPTIMIZED PRODUCTION OF A COMPONENT WITH AT LEAST ONE SECONDARY FORMED ELEMENT
PROCÉDÉ DE FABRICATION OPTIMISÉE D'UNE PIÈCE POURVUE D'AU MOINS UN ÉLÉMENT FAÇONNÉ SECONDAIRE

(30) Priorität: 23.02.2017 DE 102017103743
(43) Veröffentlichungstag der Anmeldung: 01.01.2020
(73) Patentinhaber: Salzgitter Flachstahl GmbH, 38239 Salzgitter (DE)
(72) Erfinder: MÜTZE, Stefan, 31228 Peine (DE); SCHNEIDER, Matthias, 38173 Veltheim Ohe (DE); WESTHÄUSER, Sebastian, 38112 Braunschweig (DE)
(74) Vertreter: Meissner, Peter E.
(86) Internationale Anmeldenummer: PCT/EP2018/051680
(87) Internationale Veröffentlichungsnummer: WO 2018/153602

(56) Entgegenhaltungen:
- DE-A1-102014 016 614
- JP-A- S63 260 631
- US-A- 2 859 510
- US-A1- 2007 151 317

## Beschreibung

Die vorliegende Erfindung betrifft ein Verfahren zur optimierten Herstellung eines Bauteils, insbesondere aus Stahl, mit zumindest einem Nebenformelement, insbesondere einem Kragen oder einem Flansch, das sich insbesondere dadurch auszeichnet, dass die Geometrie des Nebenformelementes gezielt einstellbar ist und das Bauteil daher sehr präzise und für verschiedene Anwendungen individuell gefertigt werden kann. Das Bauteil zeichnet sich weiterhin dadurch aus, dass es einteilig mit dem Nebenformelement ausgebildet ist und auch im Bereich der umgeformten Kanten eine sehr hohe Stabilität aufweist.

Unter einer Platine oder Blechplatine wird im Folgenden ein Zuschnitt eines Bleches, insbesondere eines Stahlbleches verstanden. Die Blechplatinen können unbeschichtet oder mit einem metallischen und/oder organischen Korrosionsschutzüberzug versehen sein.

Unter Bauteil wird im Folgenden ein aus einer Blechplatine durch Umformen mittels eines Umformwerkzeuges bei Umgebungstemperaturtemperatur hergestelltes Bauteil verstanden. Als Blechwerkstoffe kommen dabei alle umformbaren Metallwerkstoffe in Betracht, insbesondere jedoch Stahl.

Derartige Bauteile werden hauptsächlich im Automobilbaubau verwendet, aber auch in der Hausgeräteindustrie, im Maschinenbau oder im Bauwesen oder im Bereich der gelben bieten sich Einsatzmöglichkeiten.

Der intensiv umkämpfte Automobilmarkt zwingt die Hersteller, ständig nach Lösungen zur Senkung ihres Flottenverbrauches unter Beibehaltung eines höchstmöglichen Komforts und Insassenschutzes zu suchen. Dabei spielt einerseits die Gewichtsersparnis aller Fahrzeugkomponenten eine entscheidende Rolle, andererseits aber auch ein möglichst günstiges Verhalten der einzelnen Bauteile bei hoher statischer und dynamischer Beanspruchung im Betrieb wie auch im Crashfall.

Den notwendigen Werkstoffanforderungen versuchen die Vormateriallieferanten dadurch Rechnung zu tragen, dass durch die Bereitstellung hoch- und höchstfester Stähle die Wanddicken reduziert werden können, bei gleichzeitig verbessertem Bauteilverhalten bei der Fertigung und im Betrieb.

Diese Stähle müssen daher vergleichsweise hohen Anforderungen hinsichtlich Festigkeit, Formänderungsvermögen, Zähigkeit, Energieaufnahmevermögen und Korrosionsbeständigkeit sowie ihrer Verarbeitbarkeit, beispielsweise bei der Kaltumformung in Bezug auf das Dauerschwingverhalten und beim Schweißen, genügen.

Unter den vorgenannten Aspekten gewinnt die Herstellung von Bauteilen aus höherund hochfesten Stählen mit Streckgrenzen oberhalb 400 MPa, vorteilhaft oberhalb 600 oder oberhalb 800 MPa bis etwa 1800 MPa oder sogar darüber zunehmend an Bedeutung. Beispielsweise kommen ferritische oder bainitische oder Dualphasenstähle mit folgender Legierungszusammensetzung in Gew.-% zum Einsatz:

| | |
|---|---|
| C | 0,01 - 0,2% |
| Si | 0,2 - 4,0% |
| Mn | 0,5 - 4,0% |
| Al | 0,02 - 0,1 |
| Ti | 0,0 - 0,2 |
| V | 0,0 - 0,3 |
| Nb | 0,0 - 0,1 |

mit optionaler Zugabe von Cr, Ni, Mo, B, Rest Eisen, einschließlich erschmelzungsbedingter Verunreinigungen.

Es ist bekannt, zur Herstellung eines Bauteils zunächst eine Blechplatine aus Warmoder Kaltband bei Raumtemperatur auf Maß zu schneiden. Als Schneidverfahren kommen zumeist mechanische Trennverfahren, wie z.B. das Abscheren oder Stanzen, seltener aber auch thermische Trennverfahren, wie z.B. das Laserschneiden, zur Anwendung. Thermische Trennverfahren sind deutlich kostenintensiver im Vergleich zu mechanischen Trennverfahren, so dass diese nur in Ausnahmefällen eingesetzt werden.

Nach dem Zuschneiden wird die zugeschnittene Platine in ein Umformwerkzeug gelegt und in ein- oder mehrstufigen Umformschritten das fertige Bauteil, wie z.B. ein Fahrwerksträger, erzeugt.

Bei der Umformung werden die Schnittkanten, insbesondere wenn sie auf- bzw. hochgestellt werden, z.B. bei Kragenoperationen in gelochten Platinen, besonders belastet.

Vor der Umformung werden optional diverse weitere Fertigungsschritte, wie z.B. Stanz- und Schneidoperationen an der Platine, vorgenommen.

An den Schnittkanten können diverse Vorschädigungen vorliegen. Diese sind einerseits bedingt durch eine Kaltverfestigung des Werkstoffs, hervorgerufen durch das mechanische Trennen, das eine totale Umformung bis zur Materialtrennung darstellt. Andererseits kann eine Kerbwirkung auftreten, welche durch die Topographie der Schnittfläche entsteht.

Gerade bei den hier betrachteten Stählen tritt daher bei der anschließenden Umformung eine erhöhte Risswahrscheinlichkeit in den Randbereichen dieser Schnittkanten auf.

Die genannten Vorschädigungen an den Blechkanten können zum vorzeitigen Versagen bei nachfolgenden Umformoperationen bzw. beim Betrieb der Komponente führen.

Um die Kantenrissempfindlichkeit bei der Kaltumformung von schergeschnittenen oder gestanzten Blechkanten zu minimieren, sind z.B. Ansätze zur Veränderung der Legierungszusammensetzung und Werkstoffprozessierung (z.B. gezieltes Einstellen eines optimierten Gefüges) oder der Verfahrenstechnik beim Kaltbeschnitt der Platine (z.B. über Modifikationen von Schneidspalt, Geschwindigkeit, Mehrfachbeschnitt etc.) bekannt.

Diese Maßnahmen sind entweder teuer und aufwändig (z.B. mehrstufige Schneidoperationen, Instandhaltung von 3-D Schneidwerkzeugen etc.), oder sie liefern noch keine optimalen Ergebnisse.

Des Weiteren ist es aus der Offenlegungsschrift DE 10 2009 049 155 A1 bekannt, zumindest den Bereich der Schnittkante auf eine definierte Temperatur zu erwärmen und das Schneiden bei dieser Temperatur durchzuführen, um die Umformbarkeit der geschnittenen Kanten zu verbessern und so die Kaltverfestigung im Bereich der Schnittkante zu reduzieren oder zu vermeiden. Nachteilig sind hierbei der zur Erwärmung des Bleches notwendige hohe technische und wirtschaftliche Aufwand einerseits und andererseits die Zwangskopplung einer Erwärmung der Platine mit unmittelbar nachfolgendem Schneiden, die die Produktion unflexibler macht.

Aus der Offenlegungsschrift DE 10 2011 121 904 A1 ist es zudem bekannt, ein schergeschnittenes Blech kalt umzuformen und vor weiteren Umformvorgängen die kaltverfestigten Bereiche lokal mittels eines Lasers zu erwärmen mit dem Ziel einer partiellen Entfestigung. Nachteilig ist hierbei insbesondere die lokale Entfestigung, die hinsichtlich des eingesetzten oft hoch- und höchstfesten Materials insbesondere bei Belastungssituationen und unter schwingender Beanspruchung eine Ungänze darstellt. Darüber hinaus ist unklar, wo genau die Erwärmung stattfinden und wie die lokale Erwärmung mit Temperatur und Zeitverlauf konkret erfolgen soll. Des Weiteren ist unklar, wie und in welchem Maße durch die partielle Entfestigung das Umformvermögen des bereits kaltumgeformten Bleches verbessert werden kann.

Die Offenlegungsschrift DE 10 2014 016 614 A1 beschreibt ein Verfahren zur Herstellung eines Bauteils durch Umformen einer Platine aus Stahl, bei dem eine zugeschnittene Platine nach optionalen Stanz- und/oder Schneidoperationen in den Bereichen der schergeschnittenen Kanten einer kurzen Temperaturbehandlung (max. 10 Sekunden) bei mindestens 600 °C unterzogen wird. Die wärmebehandelten Kanten werden anschließend zu einem beliebigen Zeitpunkt nach ihrer Erwärmung kalt umgeformt. Auch wenn dieses Verfahren grundsätzlich eine im Vergleich zu anderen vorbekannten Verfahren erhöhte Umformbarkeit kaltverfestigter, mechanisch getrennter Blechkanten ermöglicht, ist es dennoch erstrebenswert, geometrische Randbedingungen eines durch Umformung erzeugten Nebenformelementes definiert und gezielt einstellen zu können, um eine präzisere Ausbildung sowie erhöhte Stabilität des Nebenformelementes zu erreichen.

Aus der Offenlegungsschrift DE 11 2007 000 239 T5 geht ein Verfahren zum Herstellen einer Radschüssel hervor. Ein ebener Scheibenrohling wird zu einer schüsselförmigen Radscheibe umgeformt. Die schüsselförmige Radscheibe wird umgeformt, um Speichen bildende Bereiche benachbart zu Fenster bildenden Bereichen auszugestalten. In jedem der Fenster bildenden Bereiche wird ein Fenster in einer im wesentlichen vertikalen Richtung ausgebildet, wobei jedes Fenster einen zugehörigen äußeren Rand nahe eines umlaufenden äußeren Bandes um den Umfang der Radschüssel aufweist. Die Fenster begrenzen eine Mehrzahl Speichen zwischen benachbarten Fenstern. Eine Umfangslänge eines jeden Fensters entlang des äußeren Streifens ist vorzugsweise größer ist als eine Umfangslänge einer jeden Speiche. Der äußere Rand wird teilweise zur Bildung einer Zylinderform mittels eines Umformwerkzeuges umgeformt, das zumindest auf ein Teil des äußeren Randes einwirkt, wobei das Umformwerkzeug eine Betätigungsfläche mit einem Zwischenabsatz aufweist, um eine Umfangskante des äußeren Streifens aufzunehmen, um wellenförmige Verformungen des äußeren Streifens zu verringern. Der äußere Rand wird dann vollständig durch einen zylindrischen Stempel in eine im Wesentlichen zylindrische Form gebracht, indem er axial entlang seines äußeren Rands gezogen wird. Mit der Erfindung sollen Riffel- und Wellenbildungen bei der Ausformung der Kragen verhindert werden.

Auch mit diesem bekannten Verfahren können die geometrischen Randbedingungen, wie Wanddicke und Wandhöhe eines durch Umformung erzeugten Nebenformelementes noch nicht gezielt eingestellt werden.

Es ist daher die Aufgabe der vorliegenden Erfindung, ein alternatives Verfahren zur Herstellung eines Bauteils, insbesondere aus Stahl mit angeformtem Nebenformelement bereitzustellen, bei dem sich die geometrischen Randbedingungen, z.B. die Wandstärke und/oder die Wandhöhe des Nebenformelementes gezielt und individuell einstellen lassen.
1. Die Erfindung löst diese Aufgabe mit den Merkmalen der Ansprüche und insbesondere durch
   1. Bereitstellen einer bei Raumtemperatur aus einem Band oder einem Blech zugeschnittenen Platine, in welcher optional durch Stanz- oder Schneidoperationen Aussparungen und/oder Durchbrüche erzeugt wurden;
   2. Temperaturbehandlung ausgewählter durch die Stanz- oder Schneidoperationen kaltverfestigter Kantenbereiche der Platine, bei der die Kantenbereiche für eine Dauer von maximal 10 Sekunden auf eine Temperatur von mindestens 600 °c erwärmt werden;
   3. Umformen der temperaturbehandelten Kantenbereiche der Platine bei Umgebungstemperatur zum Erhalt eines Bauteiles mit Roh-Nebenformelement; gekennzeichnet durch einen zusätzlichen Umformschritt,
   4. der durch eine entgegengesetzt zu der vorhergehenden Umformrichtung ausgeübten Kraft erfolgt oder der durch eine Umformung der Kantenbereiche mit einer Kraft, die der vorausgehenden Umformung in Aufweitrichtung zumindest teilweise entgegengesetzt ist

Als Umgebungstemperatur werden sowohl die Raumtemperatur, beispielsweise 20°C, als auch die Temperatur des Umformwerkzeugs betrachtet. Die Temperatur des Umformwerkzeugs kann dabei deutlich über der Raumtemperatur liegen.

Die in Schritt a) des erfindungsgemäßen Verfahrens bereitgestellte Platine weist in den Bereichen ihrer schergeschnittenen Kanten eine unerwünschte Kaltverfestigung auf, die die Umformbarkeit der Platine erheblich reduziert. Dies betrifft sowohl die durch den Zuschnitt aus dem Blech oder Band schergeschnittenen Kantenbereiche als auch die durch einen geschlossenen Schnitt bzw. eine Stanzoperation schergeschnittenen Kantenbereiche und auch die durch einen offenen Schnitt bzw. eine Schneidoperation schergeschnittenen Kantenbereiche.

Unter einem geschlossenen Schnitt versteht man für die Zwecke der Erfindung eine Stanzoperation oder eine Schneidoperation, deren Anfangspunkt identisch mit dem Endpunkt ist. Das Ergebnis eines solchen geschlossenen Schnittes ist demnach eine Durchbrechung in der Platine, beispielsweise eine kreisrunde oder eine polygone, z.B. viereckige Durchbrechung. Unter einem offenen Schnitt versteht man hingegen eine Schneidoperation, deren Anfangspunkt nicht identisch mit dem Endpunkt ist. Das Ergebnis eines solchen offenen Schnittes ist demnach eine schergeschnittene Kontur beliebiger Geometrie.

Durch den Prozess des Scherschneidens stellt sich in den Bereichen der betroffenen Kanten eine Kaltverfestigung in dem jeweiligen Werkstoff ein, die in nachfolgenden Umformprozessen bekanntermaßen häufig zu Rissbildung führt.

Durch die erfindungsgemäße Temperaturbehandlung gemäß Schritt b) lässt sich die unerwünschte Kaltverfestigung eliminieren oder zumindest stark reduzieren, sodass der Werkstoff auch in den Bereichen der schergeschnittenen Kanten umgeformt werden kann, ohne dass diese dabei eine erhöhte Rissanfälligkeit zeigen. Zur Eliminierung bzw. Reduzierung der Kaltverfestigung ist bereits eine kurze Temperaturbehandlung von maximal 10 Sekunden Dauer ausreichend. Bevorzugt erfolgt die Temperaturbehandlung für eine Dauer von 0,02 bis 10 Sekunden und noch bevorzugter für eine Dauer von 0,1 bis 2 Sekunden.

Das Prozessfenster für die zu erreichende Temperatur im Schnittkantenbereich ist zudem sehr groß und umfasst einen Temperaturbereich von oberhalb 600 °C bis hin zur Solidustemperatur von ca. 1500 °C, z.B. einen Bereich zwischen der Umwandlungstemperatur Ac1 und der Solidustemperatur.

Entscheidend bleibt in jedem Falle, dass durch die Temperaturbehandlung die durch das Schneiden eingebrachte Kaltverfestigung weitestgehend eliminiert wird.

Durch die erfindungsgemäß Wärmebehandlung stellt sich im Bereich der Schnittkante eine gleiche bzw. höhere Härte gegenüber dem nicht wärmebehandelten Grundwerkstoff ein. Beispielweise steigt die Vickershärte um bis zu 1000 HV.

Aufgrund der Eliminierung der Kaltverfestigung können die temperaturbehandelten Kantenbereiche der Platine in Schritt c) des erfindungsgemäßen Verfahrens bei Raumtemperatur zu einem Roh-Nebenformelement mit anspruchsvoller Geometrie umgeformt werden, beispielsweise zu einem Kragen mit großer Kragenhöhe oder zu einem Flansch mit großer Flanschhöhe. Die Erzeugung einer solchen anspruchsvollen Geometrie ist mittels der meisten herkömmlichen Verfahren nicht möglich, da infolge der durch das Scherschneiden der Kanten hervorgerufenen Kaltverfestigung nur noch eine Umformung der Kanten in verhältnismäßig geringem Umfang möglich ist.

Durch das in der DE 10 2014 016 614 A1 beschriebene Verfahren können grundsätzlich ebenfalls Kragen mit großer Kragenhöhe und Flansche mit großer Flanschhöhe erzeugt werden, da auch dieses Verfahren die Schritte a bis c des erfindungsgemäßen Verfahrens umfasst. Es hat sich jedoch herausgestellt, dass die Wandstärke der auf diese Weise erzeugten Kragen und Flansche oftmals nicht einheitlich ist. Darüber hinaus ist mittels dieses Verfahrens keine definierte Höhe der Nebenformelemente einstellbar, da die Kantenbereiche vergleichsweise undefiniert durch Anwendung eines Aufweitwerkzeuges, beispielsweise eines konischen oder zylindrischen Stempels, umgeformt werden. Insbesondere aufgrund der undefinierten Höhe und der nicht einheitlichen Wandstärke der auf diese Weise erzeugten Nebenformelemente werden diese vorliegend als "Roh-Nebenformelemente" bezeichnet.

Die Erfindung sieht nun zum Erzeugen eines Nebenformelementes mit definierter Geometrie, z.B. mit definierter und einheitlicher Wandstärke und/oder -höhe, einen Kalibrierschritt d) vor. Dieser ist ein zusätzlicher Umformschritt bei Raumtemperatur, der zeitlich nach dem ersten Umformschritt (Schritt c des erfindungsgemäßen Verfahrens) erfolgt.

Überraschenderweise hat sich gezeigt, dass bei dem Kalibrierschritt d) durch Umformung in eine Richtung, die der Umformrichtung in Schritt c) zumindest teilweise entgegengesetzt ist, Eigenschaften des Nebenformelementes vorteilhaft veränderbar sind.

Die Umformung in Schritt c) erfolgt in der Regel durch Anwenden eines Umformwerkzeuges in eine sog. Aufweitrichtung. Beispielsweise wird zur Erzeugung eines Kragens oder eines Flansches ein Stempel in eine schergeschnittene bzw. gestanzte Durchbrechung im Bauteil eingeführt, wobei durch Ziehen des Stempels in Aufweitrichtung durch die Durchbrechung die Kantenbereiche nach oben gebogen werden.

Da es für die verschiedenen Anwendungen von Bauteilen generell vorteilhaft jedoch schwierig ist, eine möglichst große Höhe des jeweiligen Nebenformelements zu erzielen, ist es erst einmal abwegig, diese einmal erzielte Höhe des Nebenformelements durch einen zusätzlichen Umformschritt wieder zu verringern, z.B. indem eine Kraft auf die Höhe des Nebenformelementes ausgeübt wird, deren Richtung der Aufweitrichtung ganz oder teilweise entgegenwirkt. Dass dies überhaupt möglich ist, erlaubt nur die erfindungsgemäße Temperaturbehandlung sowie die erfindungsgemäße Umformung der schergeschnittenen Kantenbereiche, durch welche Nebenformelemente, z.B. Ränder, Kragen oder Flansche mit deutlich überdurchschnittlicher Höhe erzeugt werden können. Denn diese Nebenformelemente haben auch nach einer Umformung entgegengesetzt der Aufweitrichtung noch eine ausreichende Höhe, zeichnen sich aber durch verbesserte Eigenschaften aus. Denn es wurde gefunden, dass sich durch diese Umformung, die im Prinzip einer Stauchung entspricht, die Wandstärke der Nebenformelemente einerseits homogenisieren und andererseits erhöhen lässt, was sich beides positiv auf die Eigenschaften des Bauteiles, z.B. auf seine Stabilität und seine Lebensdauer, auswirkt. Weiterhin ist es möglich, durch den zusätzlichen Umformschritt, der durch eine entgegengesetzt zu der vorhergehenden Umformrichtung ausgeübte Kraft erfolgt, eine definierte Höhe des Nebenformelementes zu erzeugen, insbesondere eine definierte Randhöhe, Flanschhöhe oder Kragenhöhe. Aufgrund der Ermöglichung einer definierten Einstellung geometrischer Randbedingungen von Nebenformelementen durch den zusätzlichen Umformschritt wird dieser erfindungsgemäß als Kalibrierschritt bezeichnet.

Unter einem Kalibrierschritt wird auch eine Umformung von Kantenbereichen mit einer Kraft verstanden, die der vorausgehenden Umformung in Aufweitrichtung nicht völlig, sondern nur teilweise entgegengesetzt ist. Durch einen solchen Kalibrierschritt lassen sich beispielsweise Nebenformelemente mit um 90° abgewinkelten Rändern erzeugen. Durch diesen Kalibrierschnitt kann die Konizität und/oder die Zylindrizität vorteilhaft maßgeschneidert eingestellt werden, so dass aufwändige Nacharbeiten auf ein Minimum reduziert werden können.

Konkret kann eine definierte Einstellung von geometrischen Randbedingungen zum Beispiel eines Kragens hinsichtlich:
1. der Höhe des Kragens
2. der Wandstärke über dem Umfang und der Höhe des Kragens
3. der Formtreue (Zylindritzität/Konizität) des Kragens,
   erreicht durch:
   a) eine angepasste Stempelgeometrie zur Variation der Reibkraft zwischen Stempel und Werkstoff (1, 2)
   b) einem angepasstem Ziehspalt zwischen Stempel und Matrize zur gezielten Abstreckung des Werkstoffs (1, 2)
   c) Einführung eines Kalibrierschrittes hinsichtlich (2, 3) Kalibrierschritt kann bezüglich des langen Kragens sein:
      - in Richtung der Aufweitrichtung (auch mittels verringertem Ziehspalt - Abstrecken)
      - entgegengesetzt der Aufweitrichtung zum Stauchen des Werkstoffs mit Ziel die Wandstärke zu erhöhen/homogenisieren
      - entgegengesetzt der Aufweitrichtung zur Erzeugung von mögliche Kragenvarianten z.B. Flansch, Bördelung, definiertes Knickbauchen
   d) Kombination der Varianten a, b, c in Kombination mit der erfindungsgemäßen Erwärmung der Schnittkanten zur Ermöglichung einer deutlich höheren Umformung und verbesserter Qualität hinsichtlich 2 und 3, auch als mehrstufiger Ziehprozesse (flacher Stempel um Material vorzuziehen, Traktrixstempel um Kragen final auszuformen)

Gemäß einer vorteilhaften Weiterbildung der Erfindung weist das erfindungsgemäße Verfahren einen weiteren Umformschritt auf, in dem ausgewählte durch die Stanzoder Schneidoperationen kaltverfestigte Kantenbereiche der Platine bei Raumtemperatur umgeformt werden. Dieser weitere Umformschritt erfolgt nach dem Zuschneiden der Platine und etwaigen Stanz- und/oder Schneidoperationen und vor der Temperaturbehandlung der Kantenbereiche. Durch den zusätzlichen Umformschritt wird die Kaltverfestigung, welche sich durch den Zuschnitt und die optionalen Stanz- und/oder Schneidoperationen im Werkstoff eingestellt hat, noch weiter erhöht, jedoch in der anschließenden Temperaturbehandlung erfindungsgemäß wieder eliminiert.

In einer abgewandelten Ausführungsform weist das erfindungsgemäße Verfahren zwischen den Schritten a) und b) nicht nur den einen zusätzlichen Umformschritt, sondern noch eine beliebige Anzahl weiterer Folgen aus der erfindungsgemäßen Temperaturbehandlung der Kantenbereiche bei einer Temperatur von mindestens 600 °C für eine Dauer von maximal 10 Sekunden und einem weiteren Umformschritt auf. Auf diese Weise ist es möglich, den Werkstoff in jedem Umformschritt noch weiter zu formen, und die durch die Umformung verursachten Störfaktoren wie Kaltverfestigung, Gefügeschädigungenen und nachteilige Konturveränderungen wie z.B. Mikrorisse zu entfernen.

Die einzelnen Umform- und Temperaturbehandlungsschritte des erfindungsgemäßen Verfahrens können zu einem beliebigen Zeitpunkt, d.h. zeitlich voneinander entkoppelt, erfolgen.

Die Umformschritte des erfindungsgemäßen Verfahrens können vorteilhafterweise mit den bereits in der Produktion vorhandenen Umformwerkzeugen, z.B. zylindrischen oder konischen Stempeln, durchgeführt werden. Dadurch werden keine aufwendigen Investitionskosten zur Durchführung des erfindungsgemäßen Verfahrens niotwendig.

Das erfindungsgemäße Verfahren ist insbesondere anwendbar auf beliebige schergeschnittene Materialkanten, insbesondere auf gestanzte Löcher sowie auf Kanten mit beliebiger Kontur. Durch die erfindungsgemäß erhöhte Umformbarkeit ist es dabei möglich, auch komplexe Geometrien herzustellen, für die es beispielsweise mehrerer Umformschritte bedarf. Auch anspruchsvolle Bauteile können dadurch einteilig hergestellt werden, sodass zusätzliche Fügeoperationen entfallen können.

Die Temperaturbehandlung erfolgt in dem erfindungsgemäßen Verfahren bevorzugt über die gesamte Dicke der Platine und in Ebenenrichtung der Platine in einem Bereich, der höchstens ihrer Dicke entspricht. Die Dauer der Temperaturbehandlung richtet sich dabei nach der Art des Wärmebehandlungsverfahrens.

Die Erwärmung selbst kann auf beliebige Weise, zum Beispiel konduktiv, induktiv über Strahlungserwärmung oder mittels Laserbearbeitung erfolgen. Hervorragend geeignet für die Temperaturbehandlung ist die konduktive Erwärmung, wie sie zum Beispiel in der Automobilfertigung vielfach am Beispiel von Punktschweißungen angewendet wird.

Vorteilhaft eignet sich zum Beispiel eine Punktschweißmaschine mit eher kurzen Einwirkzeiten zur Behandlung von gestanzten Löchern in der Platine, wohingegen bei zu behandelnden längeren Kantenabschnitten das induktive Verfahren, Strahlungserwärmung oder Laserbearbeitung mit längeren Einwirkzeiten in Frage kommen.

Somit erfolgt die Wärmeeinbringung nur sehr konzentriert in den scherbeeinflussten Schnittkantenbereichen und ist daher mit einem vergleichsweise geringen Energieaufwand verbunden, insbesondere hinsichtlich Verfahren, bei denen die gesamte Platine einer Erwärmung zugeführt wird oder eine um Größenordnungen zeitlich aufwendigere Spannungsarmglühung Anwendung findet.

Gemäß einer Ausführungsform des erfindungsgemäßen Verfahrens weist die Platine einen metallischen und/oder organischen Überzug auf. Dieser Überzug kann Zink, Magnesium, Aluminium und/oder Silizium enthalten oder daraus bestehen. Die Platine selbst kann z.B. flexibel mit unterschiedlichen Dicken gewalzt sein oder aus Kalt- oder Warmband gleicher oder unterschiedlicher Dicke und/oder Güte gefügt sein. Die Erfindung ist anwendbar für warm- oder kaltgewalzte Stahlbänder aus weichen bis hochfesten Stählen.

Als höherfeste Stähle kommen alle einphasigen aber auch mehrphasige Stahlsorten zur Anwendung. Dazu gehören mikrolegierte, höherfeste Stahlsorten genauso wie bainitische, ferritische oder martensitische Sorten sowie Dualphasen, Komplexphasen und TRIP Stähle.

Gemäß einer möglichen Ausführungsform des Verfahrens kann zum Schutz vor Oxidation während sowie optional vor und/oder nach der Temperaturbehandlung der Bereich um die Stelle der Temperaturbehandlung mittels eines Inertgases gespült werden.

Aufgrund der kurzen Temperaturbehandlungsdauer von maximal 10 Sekunden kann das erfindungsgemäße Verfahren in einer Serienfertigung, die eine Taktung im Bereich von 0,1 bis 10 Sekunden vorgibt, als Zwischenfertigungsschritt integriert werden. Insbesondere die Fertigung von Blechkomponenten im Automobilbereich in mehreren aufeinander folgenden Schritten stellt somit einen prädestinierten Anwendungsbereich des erfindungsgemäßen Verfahrens dar.

Die Erfindung betrifft auch ein Bauteil mit zumindest einem Nebenformelement mit hoher und/oder homogener Wandstärke, wobei zur Herstellung des Bauteils eine bei Raumtemperatur aus einem Band oder einem Blech zugeschnittenen Platine bereitgestellt wurde, in welcher optional durch Stanz- oder Schneidoperationen Aussparungen und/oder Durchbrüche erzeugt wurden, wobei eine Temperaturbehandlung ausgewählter durch die Stanz- oder Schneidoperationen kaltverfestigter Kantenbereiche der Platine erfolgte, bei der die Kantenbereiche für eine Dauer von maximal 10 Sekunden auf eine Temperatur von mindestens 600 °C erwärmt wurden, wobei die temperaturbehandelten Kantenbereiche der Platine bei Raumtemperatur zum Erhalt eines Bauteiles mit Roh-Nebenformelement umgeformt wurden, und wobei das Roh-Nebenformelement zum Erhalt des Bauteiles mit Nebenformelement bei Raumtemperatur zu einem Nebenformelement umgeformt wurde, das eine im Vergleich zum Roh-Nebenformelement erhöhte und/oder homogenisierte Wandstärke aufweist.

In einer vorteilhaften Weiterbildung der Erfindung ist vorgesehen, dass die umgeformten Kantenbereiche wiederholt wärmebehandelt und umgeformt werden.

Bevorzugte Bauteile sind z.B. Fahrwerkbauteile aus Warmblech oder Kaltblech mit angezogenen Nebenformelementen, insbesondere Kragen, Flanschen und/oder Rändern, die durch ein erfindungsgemäßes Verfahren erhältlich sind.

Schließlich betrifft die Erfindung auch die Verwendung einer Platine aus Stahl zur Herstellung eines Bauteils mit zumindest einem Nebenformelement, wobei die zuvor bei Raumtemperatur aus einem Band oder einem Blech zugeschnittene Platine nach optionalen weiteren bei Raumtemperatur durchgeführten Fertigungsschritten, wie z.B. Stanz- oder Schneidoperationen zur Erzielung von Aussparungen oder Durchbrüchen, in ausgewählten durch die Stanz- oder Schneidoperationen kaltverfestigten Kantenbereichen einer Temperaturbehandlung unterzogen wird, bei der die Kantenbereiche für eine Dauer von maximal 10 Sekunden auf eine Temperatur von mindestens 600 °C erwärmt werden, wobei die temperaturbehandelten Kantenbereiche der Platine bei Raumtemperatur zum Erhalt eines Bauteiles mit Roh-Nebenformelement umgeformt werden, und wobei das Roh-Nebenformelement bei Raumtemperatur zu einem Nebenformelement umgeformt wird, das eine im Vergleich zum Roh-Nebenformelement erhöhte und/oder homogenisierte Wandstärke aufweist. In einer vorteilhaften Weiterbildung der Erfindung ist vorgesehen, dass auch hier die umgeformten Kantenbereiche wiederholt wärmebehandelt und umgeformt werden.

## Patentansprüche

1. Verfahren zur optimierten Herstellung eines Bauteils, insbesondere aus Stahl mit zumindest einem Nebenformelement mit den Schritten
a) Bereitstellen einer bei Raumtemperatur aus einem Band oder einem Blech zugeschnittenen Platine, in welcher durch Stanz- oder Schneidoperationen Aussparungen und/oder Durchbrüche erzeugt wurden;
b) Temperaturbehandlung ausgewählter durch die Stanz- oder Schneidoperationen kaltverfestigter Kantenbereiche der Platine, bei der die Kantenbereiche für eine Dauer von maximal 10 Sekunden auf eine Temperatur von mindestens 600 °c erwärmt werden;
c) Umformen der temperaturbehandelten Kantenbereiche der Platine bei Umgebungstemperatur zum Erhalt eines Bauteiles mit Koh-Nebentormelement; **gekennzeichnet durch** einen zusätzilchen Schritt,
d) Kalibrierschritt zum Erhalt des Bauteiles mit Nebenformelement, wobei das Roh-Nebenformelement bei Umgebungstemperatur zu einem Nebenformelement umgeformt wird, das eine im Vergleich zum Roh-Nebenformelement erhöhte und/oder homogenisierte Wandstärke aufweist, wobei dieser Kalibrierschritt in einem zusätzlichen Umformschritt besteht, der durch eine entgegengesetzt zu der vorhergehenden Umformrichtung ausgeübten Kraft erfolgt oder der durch eine Umformung der Kantenbereiche mit einer Kraft, die der vorausgehenden Umformung in Aufweitrichtung zumindest teilweise entgegengesetzt ist, erfolgt.

2. Verfahren nach Anspruch 1. **dadurch gekennzeichnet, dass** das Nebenformelement ein Kragen oder ein Flansch ist.

3. Verfahren nach einem der Ansprüche 1 oder 2, **dadurch gekennzeichnet, dass** vor der Temperaturbehandlung ein Umformschritt erfolgt, in dem ausgewählte durch die Stanz - oder Schneidoperationen kaltverfestigte Kantenbereiche der Platine bei Raumtemperatur umgeformt werden.

4. Verfahren nach einem der voranstehenden Ansprüche, **dadurch gekennzeichnet, dass** das Roh-Nebenformelement in Schritt c) durch Umformen der Kantenbereiche in eine definierte Richtung erzeugt wird und dass die in dem Kalibrierschritt d) vorgenommene Umformung derselben Kantenbereiche in entgegengesetzter Richtung erfolgt

5. Verfahren nach einem der voranstehenden Ansprüche, **dadurch gekennzeichnet, dass** die Temperaturbehandlung für eine Dauer von 0,02 bis 10 Sekunden oder von 0,1 bis 2 Sekunden erfolgt.

6. Verfahren nach einem der voranstehenden Ansprüche, **dadurch gekennzeichnet, dass** die Temperaturbehandlung bei einer Temperatur von 600 °c bis Solidustemperatur oder bei einer Temperatur zwischen der Umwandlungstemperatur ACI und der Solidustemperatur erfolgt.

7. Verfahren nach einem der voranstehenden Ansprüche, **dadurch gekennzeichnet, dass** die Erwärmung auf eine Temperatur von mindestens 600 °c induktiv, konduktiv, mittels Strahlungserwärmung oder mittels Laserstrahlung erfolgt.

8. Verfahren nach einem der voranstehenden Ansprüche, **dadurch gekennzeichnet, dass** die Platine einen organischen und/oder metallischen Überzug aufweist.

9. Verfahren nach einem der voranstehenden Ansprüche, **dadurch gekennzeichnet, dass** die Temperaturbehandlung der Kantenbereiche, ausgehend von der Kante, in einem Bereich erfolgt, der maximal der Dicke der Platine entspricht.

10. Verfahren nach einem der voranstehenden Ansprüche, **dadurch gekennzeichnet, dass** der Bereich um die Stelle der Temperaturbehandlung zum Schutz vor Oxidation während sowie optional vor und/oder nach der Temperaturbehandlung mittels eines Inertgases gespült wird.

## Claims

1. Method for the optimized production of a component, in particular made of steel, having at least one secondary shaped element, comprising the steps of
a) providing a blank cut from a strip or a metal sheet at room temperature, in which blank recesses and/or perforations have been produced by punching or cutting operations;
b) temperature-treating selected edge regions of the blank which have been strain-hardened by the punching or cutting operations, wherein the edge regions are heated to a temperature of at least 600°C for a period of at most 10 seconds;
c) reshaping the temperature-treated edge regions of the blank at ambient temperature to obtain a component having an unfinished secondary shaped element; **characterized by** an additional step
d) a calibration step for obtaining the component having a secondary shaped element, wherein the unfinished secondary shaped element is reshaped at ambient temperature to form a secondary shaped element which has a wall thickness which is increased and/or homogenized in comparison with the unfinished secondary shaped element, wherein this calibration step consists in an additional reshaping step, which takes place by means of a force exerted counter to the preceding shaping direction, or which takes place by means of reshaping the edge regions with a force which is at least partially counter to the preceding shaping in the expansion direction.

2. Method according to claim 1, **characterized in that** the secondary shaped element is a collar or a flange.

3. Method according to either of claims 1 or 2, **characterized in that** before the temperature treatment, a reshaping step takes place in which selected edge regions of the blank which have been strain-hardened by the punching or cutting operations are reshaped at room temperature.

4. Method according to any of the preceding claims, **characterized in that** the unfinished secondary shaped element is produced in step c) by reshaping the edge regions in a defined direction, and **in that** the reshaping of the same edge regions carried out in the calibration step d) takes place in the opposite direction.

5. Method according to any of the preceding claims, **characterized in that** the temperature treatment takes place for a duration of 0.02 to 10 seconds or of 0.1 to 2 seconds.

6. Method according to any of the preceding claims, **characterized in that** the temperature treatment takes place at a temperature of 600°C to solidus temperature or at a temperature between the transformation temperature AC1 and the solidus temperature.

7. Method according to any of the preceding claims, **characterized in that** the heating to a temperature of at least 600°C takes place inductively, conductively, by means of radiation heating or by means of laser radiation.

8. Method according to any of the preceding claims, **characterized in that** the blank has an organic and/or metal coating.

9. Method according to any of the preceding claims, **characterized in that** the temperature treatment of the edge regions, starting from the edge, takes place in a region which at most corresponds to the thickness of the blank.

10. Method according to any of the preceding claims, **characterized in that** the region around the location of the temperature treatment is flushed with an inert gas during and optionally before and/or after the temperature treatment in order to protect against oxidation.

## Revendications

1. Procédé de fabrication optimisée d'une pièce, en particulier en acier pourvue d'au moins un élément façonné secondaire avec les étapes suivantes
a) la mise à disposition d'un flan découpé à température ambiante à partir d'une bande ou d'une tôle, dans lequel des évidements et/ou des ouvertures ont été généré(e)s par des opérations d'estampage ou de découpe ;
b) le traitement thermique de zones d'arête du flanc sélectionnées écrouies par les opérations d'estampage ou de découpe, traitement pour lequel les zones d'arête sont chauffées pendant une durée de 10 secondes maximum à une température d'au moins 600 °C ;
c) le façonnage des zones d'arête du flan traitées thermiquement à température ambiante pour l'obtention d'une pièce avec un élément façonné secondaire brut ;
**caractérisé par** une étape supplémentaire
d) une étape d'étalonnage pour l'obtention de la pièce avec un élément façonné secondaire,
dans lequel l'élément façonné secondaire brut est façonné à température ambiante en un élément façonné secondaire qui présente une épaisseur de paroi accrue et/ou homogénéisée par rapport à l'élément façonné secondaire brut, dans lequel cette étape d'étalonnage consiste en une étape de façonnage supplémentaire qui est effectuée par une force exercée à l'opposé du sens de façonnage précédent ou qui est effectuée par un façonnage des zones d'arête avec une force qui est opposée au moins partiellement au façonnage précédent dans un sens d'élargissement.

2. Procédé selon la revendication 1, **caractérisé en ce que** l'élément de façonnage secondaire est un collet ou une bride.

3. Procédé selon l'une quelconque des revendications 1 ou 2, **caractérisé en ce qu'**avant le traitement thermique, une étape de façonnage est effectuée, au cours de laquelle des zones d'arête du flan sélectionnées écrouies par les opérations d'estampage ou de découpe sont façonnées à température ambiante.

4. Procédé selon l'une quelconque des revendications précédentes, **caractérisé en ce que** l'élément de façonnage secondaire brut à l'étape c) est généré par façonnage des zones d'arête dans un sens défini et que le façonnage entrepris à l'étape d'étalonnage d) des mêmes zones d'arête est effectué dans le sens opposé.

5. Procédé selon l'une quelconque des revendications précédentes, **caractérisé en ce que** le traitement thermique est effectué pendant une durée de 0,02 à 10 secondes ou de 0,1 à 2 secondes.

6. Procédé selon l'une quelconque des revendications précédentes, **caractérisé en ce que** le traitement thermique est effectué à une température de 600 °C jusqu'à la température de solidus ou à une température entre la température de transition ACI et la température de solidus.

7. Procédé selon l'une quelconque des revendications précédentes, **caractérisé en ce que** le chauffage à une température d'au moins 600 °C est effectué de manière inductive, conductive, au moyen d'un chauffage par rayonnement ou au moyen d'un rayonnement laser.

8. Procédé selon l'une quelconque des revendications précédentes, **caractérisé en ce que** le flan présente un revêtement organique et/ou métallique.

9. Procédé selon l'une quelconque des revendications précédentes, **caractérisé en ce que** le traitement thermique des zones d'arête est effectué, à partir de l'arête, dans une zone qui correspond au maximum à l'épaisseur du flan.

10. Procédé selon l'une quelconque des revendications précédentes, **caractérisé en ce que** la zone est rincée autour de l'endroit du traitement thermique pour la protection contre l'oxydation pendant, ainsi que facultativement, avant et/ou après le traitement thermique au moyen d'un gaz inerte.
